Europäisches Patentamt

European Patent Office

Office européen des brevets

(19)

(11) **EP 1 465 208 A2**

(12) **EUROPEAN PATENT APPLICATION**

(43) Date of publication:
06.10.2004 Bulletin 2004/41

(51) Int Cl.7: **G21K 4/00**

(21) Application number: 04006352.1

(22) Date of filing: 17.03.2004

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL LT LV MK** | (72) Inventors:<br>• **Maezawa, Akihiro**<br>  **Hino-shi Tokyo 191-8511 (JP)**<br>• **Mishina, Noriyuki**<br>  **Hino-shi Tokyo 191-8511 (JP)** |
| (30) Priority: **24.03.2003 JP 2003079230** | (74) Representative:<br>**Gille Hrabal Struck Neidlein Prop Roos**<br>**Patentanwälte**<br>**Brucknerstrasse 20**<br>**40593 Düsseldorf (DE)** |
| (71) Applicant: **KONICA MINOLTA HOLDINGS, INC.**<br>**Tokyo 100-0005 (JP)** | |

(54) **Radiographic image conversion panel and method for its production**

(57)     A method for manufacturing a radiographic image conversion panel having a photostimulable phosphor layer on a support. The method includes: setting a distance between a photostimulable phosphor basic material and a substrate 7 to 60 cm; controlling a temperature of the substrate; and evaporating the photostimulable phosphor basic material in a vacuum of 1.0 x $10^{-2}$ Pa with an evaporation speed of 0.5 µm/min or more, to form a photostimulable phosphor in the photostimulable phosphor layer by a vapor phase method. The evaporation speed is preferably in a range of 0.5 to 10 µm/min.

EP 1 465 208 A2

**Description**

BACKGROUND

Technical Field

The present invention relates to a method for manufacturing a radiographic image conversion panel and the radiographic image (hereinafter also referred to as a radiograph) conversion panel obtained by the manufacturing method.

Description of the Related Art

In earlier technology, so-called radiography in which silver salt is used to obtain a radiological image has been utilized. However, the method for imaging a radiological image without silver salt has been developed. That is, the method of imaging by a phosphor absorbing the radial ray transmitted through a subject in a phosphor, thereafter, excited by certain type of energy, and radiating radiological energy accumulated in the phosphor as fluorescence, is disclosed.

A concrete example of a radiographic image conversion method is known, in which a panel comprising and a photostimulable phosphor layer provided on a support (hereinafter also referred to as base material) is applied, and both of/either visible light and/or infrared light is used as excitation energy (see U.S. Patent No. 3,859,527).

A radiographic image conversion method using a photostimulable phosphor of higher luminance and sensitivity has been developed. A radiographic image conversion method using a BaFX: $Eu^{2+}$ system (X: Cl, Br, I) phosphor disclosed in JP Tokukaisho-59-75200A, a radiographic image conversion method using an alkali halide phosphor disclosed in such as JP Tokukaisho-61-72087A, and an alkali halide phosphor containing metals of $T1^+$ $Ce^{3+}$, $Sm^{3+}$, $Eu^{3+}$, $Y^{3+}$, $Ag^+$, $Mg^{2+}$, $Pb^{2+}$ and $In^{3+}$ as a co-activator disclosed in JP Tokukaisho-61-73786A and 61-73787A are the examples.

In late years, in analysis of a diagnostic image, a radiographic image conversion panel having higher sharpness has been required.

As a method for improving the sharpness, for example, attempts of controlling the shape of photostimulable phosphor itself have been made in order to improve sensitivity and sharpness.

One of these attempts is, for example, a method of using a fine quasi-columnar photostimulable phosphor layer deposited on a support having a fine concavoconvex pattern, which is disclosed on JP Tokukaisho-61-142497A.

Further, the following methods and the like are also proposed; as disclosed in JP Tokukaisho-61-142500A, a method of using a radiographic image conversion panel having a photostimulable phosphor layer in which the cracks of a columnar photostimulable phosphor deposited on a support having a fine pattern are further developed with shock-treatment; as disclosed in JP Tokukaisho-62-39737A, a method of using a radiographic image conversion panel having a photostimulable phosphor layer cracked from the surface side to be quasi-columnar pattern; and, as disclosed in JP Tokukaisho-62-110200A, a method of forming a photostimulable phosphor layer having pores onto a support by deposition, subsequently the pores developed to be cracks with heat treatment.

In addition, in JP Tokukaihei-2-58000A, a radiographic pattern conversion panel is described which has a photostimulable phosphor layer where strip columnar crystals with a definite slope against a normal line of a support are formed on the support by a vacuum deposition film formation method.

In late years, a radiographic image conversion panel using alkali halide such like CsBr as a base material is proposed. Especially when Eu is used as an activator, the improvement of X ray conversion efficiency, which has not achieved before, is expected.

However, diffusion of Eu due to heat is remarkable and Eu has a nature that vapor pressure under vacuum is high. Thus, Eu is easily dispersed in the host and a problem has occurred where Eu exists with uneven distribution in the host. As a result, it has been difficult to obtain high X-ray conversion efficiency by using and activating Eu, and Eu did not come into practical use in the market.

In activators of rare earth elements by which high X-ray conversion efficiency is obtained, the vacuum deposition film formation method influences heat distribution of a substrate because heating at the deposition becomes radiant heat of the substrate.

This heat distribution is also changed by a degree of vacuum, crystal growth becomes uneven by the heat distribution, and rapid disturbance occurs in luminance and sharpness. In the vacuum deposition formation method, it has been difficult issues to control these performances.

Therefore, in the vacuum deposition film formation method, particularly when rare earth elements such as Eu are used, only by controlling the vapor pressure property, it has been difficult to accomplish the high X-ray conversion efficiency.

Also in the vacuum deposition film formation method, utilization efficiency of primary materials is only several percents to 10%. Thus, the product has become expensive and lacked a multipurpose property (see e.g., JP-Tokukaihei-10-140148A; JP-Tokukaihei-10-265774A).

Meanwhile, there is barium iodide such as BFX:Eu (X = halogen atom) as a compound conventionally practically used in a coating type photostimulable phosphor layer. It is inexpensive, but the compound is poor in transparency at a luminescent region of 390 to 410 nm. There has been problematic in that scattering on particle surfaces becomes remarkable and the sharpness is reduced.

Meanwhile, particularly when utilized for the use of mammography, the high sharpness is required. Thus, it is necessary to use a radiographic image conversion panel where a phosphor layer is made a thin film. When a thin film is formed by the vacuum deposition film formation method (deposition plate method) and alkali halide crystals are made into columnar shapes, it has been found that a crystal shape becomes thin at a substrate side and thick at a surface side, the crystal in triangular pyramid shape is obtained, and in the crystal particularly with a film thickness of less than 120 $\mu$m, a filling factor of a phosphor in a phosphor layer is low, and the sharpness and an X-ray absorption amount are extremely poor (see e.g., JP-Tokukaihei-10-140148A; JP-Tokukaihei-10-265774A).

Therefore, in the market, a radiographic image conversion panel which is excellent in luminance, sharpness and X-ray conversion efficiency (X-ray absorption amount) and a method for manufacturing the radiographic image conversion panel have been required.

SUMMARY

In accordance with a first aspect of the invention, the method for manufacturing a radiographic image conversion panel having a photostimulable phosphor layer on a support, comprises: setting a distance between a photostimulable phosphor basic material and a substrate 7 to 60 cm; controlling a temperature of the substrate; and evaporating the photostimulable phosphor basic material at 1.0 x $10^{-2}$ Pa with an evaporation speed of 0.5 $\mu$m/min or more, to form a photostimulable phosphor in the photostimulable phosphor layer by a vapor phase manner.

According to the first aspect of the invention, it is possible to provide a radiographic image conversion panel which is excellent in luminance, sharpness and X-ray absorption rate.

In accordance with a second aspect of the invention, the radiographic image conversion panel is produced by the method of the first aspect, wherein the photostimulable phosphor layer of the radiographic image conversion panel has a thickness of 50 to 120 $\mu$m and an X-ray absorption amount of 70 to 95%.

BRIEF DESCRIPTION OF THE DRAWINGS

The present invention will become more fully understood from the detailed description given hereinbelow and the accompanying drawings which are given by way of illustration only, and thus are not intended as a definition of the limits of the present invention, and wherein;

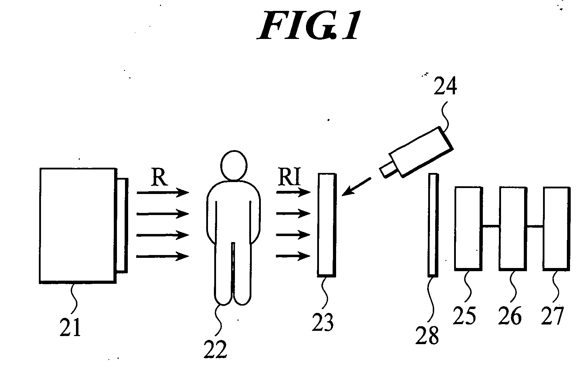

FIG. 1 is a schematic view showing a construction example using a radiographic pattern conversion panel according to an embodiment of the present invention.

PREFERRED EMBODIMENTS OF THE INVENTION

Embodiments of the invention will be described in detail.

1. A first aspect of the invention is a method for manufacturing a radiographic image conversion panel having a photostimulable phosphor layer on a support, comprising: setting a distance between a photostimulable phosphor basic material and a substrate 7 to 60 cm; controlling a temperature of the substrate; and evaporating the photostimulable phosphor basic material at 1.0 x $10^{-2}$ Pa with an evaporation speed of 0.5 $\mu$m/min or more, to form a photostimulable phosphor in the photostimulable phosphor layer by a vapor phase method.

2. In the method of paragraph 1, preferably, the evaporation speed is 0.5 to 10 $\mu$m/min.

3. Preferably, the controlling a temperature of the substrate is performed by cooling.

4. In the method of paragraph 3, preferably, the cooling comprises controlling the temperature of the substrate in a range of 10 to 200°C.

5. A second aspect of the invention is a radiographic image conversion panel produced by the method of paragraph 1, wherein the photostimulable phosphor layer of the radiographic image conversion panel has a thickness of 50 to 120 $\mu$m and an X-ray absorption amount of 70 to 95%.

6. In the panel of paragraph 5, preferably, the photostimulable phosphor layer contains a photostimulable phosphor which makes alkali halide represented by a general formula (1) a host,

$$M^1X \cdot aM^2X' \cdot bM^3X'' : eA \qquad (1)$$

where $M^1$ represents at least one alkali metal atom selected from atoms of Li, Na, K, Rb and Cs; $M^2$ represents at least one bivalent metal atom selected from atoms of Be, Mg, Ca, Sr, Ba, Zn, Cd, Cu and Ni; $M^3$ represents at least one trivalent metal atom selected from atoms of Sc, Y, La, Ce, Pr, Nd, Pm, Sm, Eu, Gd, Tb, Dy, Ho, Er, Tm, Yb, Lu, Al, Ga and In; X, X' and X" represent at least one halogen atom selected from atoms of F, Cl, Br and I; A is at least one metal atom selected from respective atoms of Eu, Tb, In, Ce, Tm, Dy, Pr, Ho, Nd, Yb, Er, Gd, Lu, Sm, Y, Tl, Na, Ag, Cu and Mg; and a, b and e satisfy $0 \leq a < 0.5$, $0 \leq b < 0.5$ and $0 < e \leq 0.2$.

7. In the radiographic image conversion panel of paragraph 5, preferably, an average particle diameter of phosphor particles at an extremity of phosphor crystals in the photostimulable phosphor layer is in a range of 0.1 to 5 µm.

Preferred embodiments of the invention will be described in further detail.

In the method for manufacturing a radiographic image conversion panel having a photostimulable phosphor layer (hereinafter may be simply referred to as phosphor layer) on a support, according to the first aspect of the present invention, at least one photostimulable phosphor layer is formed of a photostimulable phosphor by evaporating phosphor basic materials at an evaporation speed of 0.5 µm/min or more, preferably, 0.5 to 10 µm/min. In the method, it is preferable that a step of controlling a substrate temperature is a cooling one to enhance the advantageous effects of the invention.

That is, it is possible to obtain a phosphor layer having fine columnar crystals, enhance a filling factor of a phosphor in the phosphor layer and consequently obtain a radiographic image conversion panel excellent in sharpness by making a distance between photostimulable phosphor basic materials and a substrate 7 to 60 cm, controlling the substrate temperature and making the evaporation speed of the phosphor basic materials 0.5 to 10 µm/min.

Also, as a result of various studies, the present inventors have found that variation of crystal diameters in crystal growth can be controlled by cooling the substrate because the substrate temperature is raised as temperature is raised by heating due to evaporation on the substrate, the crystal diameters gradually thicken and the crystals become corn-shape to extremely reduce the sharpness.

The substrate cooling was performed by water cooling and an electrostatic chuck was used for adhesion of a substrate cooling section. It is preferred that a cooling temperature is from 10 to 200 °C by cooling the substrate.

In the invention, it is preferable that a film thickness of at least one photostimulable phosphor layer becomes less than 120 µm and an X-ray absorption amount of the photostimulable phosphor layer (X-ray absorption rate) is from 70 to 95% by manufacturing the radiographic image conversion panel by the above method for manufacturing the radiographic image conversion panel.

As a result of further study, the present inventors have found that to increase the X-ray absorption amount on a thin film, an average particle diameter of the crystal extremities can be reduced by increasing column developing points at an initial stage of columnar crystals developed on the substrate and making the average particle diameter at the crystal extremities of the phosphor 0.1 to 5 µm, and that it becomes possible to maintain the excellent sharpness by a light guiding (fiber) effect.

The higher concentrations of evaporation and vapor are, the more developing points are developed at the initial stage of the columnar crystals.

The evaporation or vapor concentration is identical to an evaporation speed. The faster the evaporation speed is, the higher the evaporation or vapor concentration is. Thus it is possible to suppress crystal growth and increase the developing points at the initial stage of columnar crystals.

Whether the developing points at the initial stage of columnar crystals are many or few can be confirmed by measuring a width of column around the substrate against an extremity diameter of the columnar crystal by an SEM photograph of a crystal section.

Therefore, in the invention, the evaporation speed of an evaporation source is from 0.5 to 10 µm/min or more, consequently the film thickness of the photostimulable phosphor layer becomes from 50 to 120 µm and the X-ray absorption amount of the photostimulable phosphor layer becomes from 70 to 95%. Thus it is possible to obtain the radiographic image conversion panel with high luminance and high sharpness which is excellent in X-ray absorption rate.

In the invention, it is preferable to manufacture the photostimulable phosphor layer of the invention by an application manner. The photostimulable phosphor layer is composed mainly of the phosphor and high molecular resin, and coated and formed on the support using a coater.

As the photostimulable phosphor which can be used for the coating type phosphor layer, generally used are photostimulable phosphors which exhibit photostimulated luminescence at a wavelength range of 300 to 500 nm by excitation light at a wavelength range of 400 to 900 nm.

The photostimulable phosphor represented by the above general formula (1) preferably used for the invention will be illustrated below.

$$M^1X \cdot aM^2X' \cdot bM^3X'' : eA \qquad \text{General formula (1)}$$

As for the photostimulable phosphor represented by the former-described formula (1), $M^1$ represents at least one kind of alkali metal selected from Li, Na, K, Rb, Cs and the like. Among them, at least one kind of alkali metal selected from Rb and Cs is preferable, and Cs is more preferable.

$M^2$ represents at least one kind of bivalent metal selected from Be, Mg, Ca, Sr, Ba, Zn Cd, Cu, Ni and the like. Among them, a bivalent metal selected from Be, Mg, Ca, Sr and Ba is preferable.

$M^3$ represents at least one kind of trivalent metal selected from Sc, Y, La, Ce, Pr, Nd, Pm, Sm, Eu, Gd, Tb, Dy, Ho, Er, Tm, Yb, Lu, Al, Ga, In and the like. Among them, a trivalent metal selected from Y, Ce, Sm, Eu, Al, La, Gd, Lu, Ga and In is preferable.

A represents at least one kind of metal selected from Eu, Tb, In, Ce, Tm, Dy, Pr, Ho, Nd, Yb, Er, Gd, Lu, Sm, Y, Tl, Na, Ag, Cu and Mg, and is preferably Eu metal atom.

From the viewpoint of improving photostimulated luminescence luminance of a photostimulable phosphor, X, X' and X'' represent at least one kind of halogen selected from F, Cl, Br and I, among them, preferably at least one kind of halogen selected from Br and I. At least one kind of halogen selected from Br and I is more preferable.

In the chemical compound represented in the general formula (1), a is $0 \leq a < 0.5$, preferably $0 \leq a < 0.01$, and b is $0 \leq b < 0.5$, preferably $0 \leq b \leq 10^{-2}$, and e is $0 < e \leq 0.2$, preferably $0 < e \leq 0.1$.

Used as for the materials of the phosphor are;

(a) at least one kind of chemical compound selected from NaF, NaCl, NaBr, NaI, KF, KCl, KBr, KI, RbF, RbCl, RbBr, RbI, CsF, CsCl, CsBr and CsI,

(b) at least one kind of chemical compound selected from $MgF_2$, $MgCl_2$, $MgBr_2$, $MgI_2$, $CaF_2$, $CaCl_2$, $CaBr_2$, $CaI_2$, $SrF_2$, $SrCl_2$, $SrBr_2$, $SrI_2$, $BaF_2$, $BaCl_2$, $BaBr_2$, $BaBr_2 \cdot 2H_2O$, $BaI_2$, $ZnF_2$, $ZnCl_2$, $ZnBr_2$, $ZnI_2$, $CdF_2$, $CdCl_2$, $CdBr_2$, $CdI_2$, $CuF_2$, $CuCl_2$, $CuBr_2$, CuI, $NiF_2$, $NiCl_2$, $NiBr_2$ and $NiI_2$, and

(c) a halide compound having at least one kind of trivalent metal selected from Sc, Y, La, Ce, Pr, Nd, Pm, Sm, Eu, Gd, Tb, Dy, Ho, Er, Tm, Yb, Lu, Al, Ga and In.

(d) As for materials of the activator, a compound having a metal selected from Eu, Tb, In, Cs, Ce, Tm, Dy, Pr, Ho, Nd, Yb, Er, Gd, Lu, Sm, Y, Tl, Na, Ag, Cu and Mg.

The phosphor materials of above-described (a) to (d) are weighed so that the factors a, b and e in the mixed composition according to the general formula (1) are within the above-described ranges, and dissolved in pure water.

Where the materials can be mixed with mortar, ball mill, mixer mill and the like. After the pH value C is regulated to $0 < C < 7$ with a predefined acid, water content of the solution is evaporated.

Among the above photostimulable phosphors, it is preferred that the photostimulable phosphor particles contain iodine. For example, iodine-containing bivalent europium-activated alkali earth metal fluoride halide type phosphors, iodine-containing bivalent europium-activated alkali earth metal halide type phosphors, iodine-containing rare earth element-activated rare earth oxy halide type phosphors, and iodine-containing bismuth-activated alkali metal halide type phosphors are preferable because they exhibit photostimulated luminescence with high luminance, and particularly it is preferred that the photostimulable phosphor is an Eu addition BaFI compound.

In the invention, as examples of binders used for the phosphor layer, it is possible to include binders of which representatives are proteins such as gelatin, polysaccharides such as dextran, or natural high molecular substances such as gum arabic, and synthetic high molecular substances such as polyvinyl butyral, polyvinyl acetate, nitrocellulose, ethylcellulose, vinylidene chloride, vinyl chloride copolymer, polyalkyl(meth)acrylate, vinyl chloride, vinyl acetate copolymer, polyurethane, cellulose acetate butyrate, polyvinyl alcohol and linear polyester, and the like. But, the invention is characterized in that the binder is a resin making thermoplastic elastomer a major ingredient. As the thermoplastic elastomer, for example, included are polystyrene-type thermoplastic elastomers described above, polyolefin type thermoplastic elastomers, polyurethane type thermoplastic elastomers, polyester type thermoplastic elastomers, polyamide type thermoplastic elastomers, polybutadiene type thermoplastic elastomers, ethylene vinyl acetate type thermoplastic elastomers, polyvinyl chloride type thermoplastic elastomers, natural gum type thermoplastic elastomers, fluorine gum type thermoplastic elastomers, polyisoprene type thermoplastic elastomers, chlorinated polyethylene type thermoplastic elastomers, styrene-butadiene gum and silicon gum type thermoplastic elastomers, and the like.

In these, the polyurethane type thermoplastic elastomers and the polyester type thermoplastic elastomers are preferable because dispersibility is good since a binding force with the phosphor is strong, ductility is rich and flexibility against radiation sensitizing screen becomes good. These binders may be those which are crosslinked with a crosslinker.

A mixing ratio of the binder to the photostimulable phosphor in a coating solution varies depending on a determined value of Hayes rate of the aimed radiographic image conversion panel, but is preferably from 1 to 20 parts by mass and more preferably from 2 to 10 parts by pass based on the phosphor.

As organic solvents used for the preparation of the photostimulable phosphor layer coating solution, for example, included are lower alcohol such as methanol, ethanol, isopropanol and n-butanol, ketone such as acetone, methylethylketone, methylisobutylketone and cyclohexane, ester of lower fatty acid and lower alcohol such as methyl acetate, ethyl acetate and n-butyl acetate, ether such as dioxane, ethyleneglycol monoethylether and ethyleneglycol monomethylether, aromatic compounds such as triol and xylol, hydrocarbon halide such as methylene chloride and ethylene chloride, and the mixtures thereof.

In the coating solution, various additives may be mixed such as a dispersant to enhance the dispersibility of the phosphor in the coating solution and a plasticizer to enhance a binding force between the binder and the phosphor in the photostimulable phosphor layer after the formation. Examples of the dispersants used for such a purpose, it is possible to include phthalic acid, stearic acid, caproic acid, lipophilic surfactants and the like. Examples of the plasticizers, it is possible to include phosphate ester such as triphenyl phosphate, tricresyl phosphate and diphenyl phosphate, phthalate ester such as diethyl phthalate and dimethoxyethyl phthalate, glycolate ester such as ethylphthalylethyl glycolate and butylphthalylbutyl glycolate; and polyester of polyethyleneglycol and aliphatic dibasic acid such as polyester of triethyleneglycol and adipic acid and polyester of diethyleneglycol and succinic acid. Also, the dispersant such as stearic acid, phthalic acid, caproic acid and lipophilic surfactant may be mixed in the photostimulable phosphor layer coating solution for the purpose of enhancing the dispersibility of photostimulable phosphor particles.

The preparation of the photostimulable phosphor layer coating solution is carried out using a dispersing apparatus such as a ball mill, bead mill, sand mill, attritor, three roll mill, high speed impeller dispersing machine, Kady mill, or ultrasonic dispersing machine, and the like.

A coating film is formed by evenly coating the coating solution prepared as the above on the support surface described below. As coating methods which can be used, it is possible to use common coating means such as a doctor blade, roll coater, knife coater, comma coater, lip coater, and the like.

The coating film formed by the above means is subsequently heated and dried to complete the formation of the photostimulable phosphor layer on the support. A film thickness of the photostimulable phosphor layer varies depending on properties of the aimed radiographic image conversion panel, types of the photostimulable phosphor, the mixing ratio of the binder to the phosphor and the like, but is from 0.5 $\mu$m to 1 mm, preferably from 10 to 500 $\mu$m, more preferably from 50 to 120 $\mu$m, in the invention.

A substance with high absorption of light and a substance with high reflection of light may be contained in the photostimulable phosphor layer, and this is effective for reduction of light diffusion of photostimulated excitation light which enters in the photostimulable phosphor layer toward a horizontal direction.

Here, substances having high light reflectance designate substances having high light reflectance for photostimulated excitation light (500 to 900nm, especially 600 to 800nm). Aluminum, magnesium, silver, indium, other metals, white pigments and coloring materials of green to red can be given as examples. White pigments can also reflect photostimulated luminescence.

As for the white pigments, $TiO_2$ (anatase and rutile type), MgO, $PbCO_3$, $Pb(OH)_2$, $BaSO_4$, $Al_2O_3$, $M_{(II)}FX$ ($M_{(II)}$ is at least one kind of element selected from Ba, Sr and Ca, and X is either Cl or Br.), $CaCO_3$, ZnO, $Sb_2O_3$, $SiO_2$, $ZrO_2$, lithopone ($BaSO_4 \cdot ZnS$), magnesium silicate, anionic silico-sulfate, anionic lead phosphate and aluminum silicate are given as examples.

These white pigments disperse photostimulated luminescence easily by reflection or refraction of light since they have high hiding power and refractive index. As a result, these substances can improve the sensitivity of the radiographic image conversion panel markedly.

As for the substances of high absorptivity, such like carbon black, chromium oxide, nickel oxide and iron oxide, and blue color materials are given as examples. Among them, carbon black also absorbs photostimulated luminescence.

Further, both organic and inorganic system color materials are available as the color materials described above. As the organic system color materials, Zabon Fast Blue 3G (produced by Hoechst), Estrol Brill Blue N-3RL (produced by Sumitomo Chemical), D & C Blue No. 1 (produced by National Aniline), Spirit Blue (produced by Hodogaya Chemical), Oil Blue No. 603 (produced by Orient), Kiton Blue A (produced by Chiba-Geigy), Aizen Catiron Blue GLH (produced by Hodogaya Chemical), Lake Blue AFH (produced by Kyowa Sangyo), Primocyanine 6GX (produced by Inabata & Co.), Brill Acid Green 6BH (produced by Hodogaya Chemical), Cyan Blue BNRCS (produced by Toyo Ink), Lionoil Blue (produced by Toyo Ink) and the like can be used.

Further, organic system metal complex salt color materials such as color index Nos. 24411, 23160, 74180, 74200, 22800, 23154, 23155, 24401, 14830, 15050, 15760, 15707, 17941, 74220, 13425, 13361, 13420, 11836, 74140, 74380, 74350, 74460 and the like can be given.

As for the inorganic system color materials, for example, inorganic pigment such as permanent blue, cobalt blue, cerulean blue, chromium oxide, $TiO_2$-ZnO-Co-NiO system and the like can be given.

Further, a photostimulable phosphor layer of the present invention can comprise a protective layer.

A protective layer can be manufactured by applying an embrocation of the protective layer directly to the photostimulable phosphor layer, adhering a separately formed protective layer is adhered to the photostimulable phosphor layer, or forming a photostimulable phosphor layer is directly formed on a previously formed protective layer.

As for materials of the protective layer, general materials for a protective layer is used such as cellulose acetate, nitrocellulose, polymethyl methacrylate, polyvinyl butyral, polyvinyl folmal, polycarbonate, polyester, polyethylene terephthalate, polyethylene, polyvynilidene chloride, nylon, polytetrafluoroethylene, polytriflurochloroethylene, tetrafluoroethylene-hexafluoropropylene copolymer, vinylidene chloride-vinyl chloride copolymer, vinylidene chloride-acrylonytrile copolymer and the like. A transparent glass sheet is also available as a protective layer.

The layer thickness of these protective layers is preferably 0.1 to $2000\mu m$.

FIG. 1 is a schematic view showing an example of a structure of radiographic image conversion panel according to the present invention.

In FIG. 1, a reference numeral 21 designates a radial ray generator, 22 designates a subject, 23 designates a radiographic image conversion panel comprising a visible or infrared light photostimulable phosphor layer having a photostimulable phosphor, 24 designates a photostimulated excitation light source to emit a radial ray latent image of radiographic image conversion panel 23 as photostimulated luminescence, 25 designates a photoelectric converter to detect the photostimulated luminance emitted from a radiographic image conversion panel 23, 26 designates a image playback equipment to replay photoelectric signals detected by a photoelectric converter 25 as an image, 27 designates a image display unit which display the reproduced image, 28 designates a filter that cut the reflected light and transmit the light only emitted from a radiographic image conversion panel 23.

In addition, FIG. 1 shows an example of obtaining a radial ray transmitted image of a subject. When a subject 22 itself radiates radial ray, the above-described radial ray generator 21 is not particularly required.

The photoelectric converter 25 or later have only to replay information of light as an image of some kind, and are not limited to the above-described system.

As shown in FIG. 1, the subject 22 is set between a radial ray generator 21 and a radiographic image conversion panel 23, and radial ray R is radiated. Then radial ray R transmits a subject 22 according to a variety of transmittance of the each part in the subject 22. The transmission image RI (that is, an image of strong and weak of radial ray) incidents to a radiographic image conversion panel 23.

A photostimulable phosphor layer of the radiographic image conversion panel 23 absorbs the incidented transmission image RI. Then electrons and/or pores, the number of which is proportional to the amount of radiation absorbed in photostimulable phosphor layer, are generated to accumulate the trap level of a photostimulable phosphor.

That is, a latent image in which the energy of a transmitted radial ray image is accumulated is formed. Succusesively the latent image is elicited by excitation of light energy.

A photostimulated excitation light source 24 irradiates visible or infrared light to a photostimulable phosphor layer. The electrons and/or pores accumulated in the trap level are flushed and accumulated energy is emitted as photostimulated luminescence.

The strength of the emitted photostimulated luminescence is proportional to the number of the accumulated electron and/or pores, e.g. the amount of radial ray energy absorbed in a photostimulable phosphor layer of the radiographic image conversion panel 23. This light signal is converted to an electric signal with a photoelectric converter 25, for example, such as a photoelectric multiplier, subsequently replayed with an image playback equipment 26, and displayed with an image display 27.

The image playback equipment 26 is more effective if it does not simply replay an electric signal as an image signal, but also can perform so called image processing and calculation, memory and storage of an image.

The emitted photostimulable luminescence desirably has the spectrum distribution in as shorter wavelength band as possible. Because a light is required to be separated into reflection light of photostimulated excitation light and photostimulated luminescence emitted from a photostimulable phosphor layer when it is exited by light energy, and a photoelectric converter which detects the luminescence emitted from photostimulable phosphor layer generally has higher sensitivity for light energy of wavelength 600nm or less.

The photostimulable phosphor of the present invention fills the above-described parameters simultaneously, since the luminescence wavelength band of the photostimulable phosphor of the present invention is between 300 and 500nm while the photostimulated excitation wavelength band is between 500 and 900nm. In resent years, since diagnostic unit has been downsized, a laser diode, which has high power output and is to be compacted easily, is preferably used, and the preferable wavelength of the laser diode is 680nm. The photostimulable phosphor applied to the radiographic image conversion panel of the present invention shows remarkably fine sharpness when excitation wavelength is 680nm.

In other words, every photostimulable phosphor of the present invention shows a luminescence having the main peak thereof at 500nm or less. Since the luminescence is easily separated from excitation light and the wavelength of the luminescence accords with spectral sensitivity of a photodetector, the photostimulated luminescence is effectively detected. As a result, the sensitivity of image receiving system is improved because of high efficiency of light detection.

A spectrum of a light source used in photostimulated excitation light source 24 includes photostimulated excitation wavelength the photostimulable phosphor used in a radiographic image conversion panel 23. Particularly, when a laser diode is used, the optical system becomes simple and the excitation light luminance becomes high. Since efficiency of photostimulated luminescence is improved, more preferable results can be obtained.

For example, as for the laser, He-Ne laser, He-Cd laser, Ar ion laser, Kr ion laser, $N_2$ laser, YAG laser and its second harmonic, ruby laser, semiconductor laser, all kinds of dye laser, metal vapor laser such as cupper vapor laser and the like can be applied. Normally continuous oscillation laser such like He-Ne laser and Ar ion laser is desirable. Pulse oscillation laser is also available when and the pulse of laser is synchronized with scanning cycle of each pixel in a panel.

If a delay of a luminescence is utilized to separate a light, as disclosed in JP-Tokukaisho-59-22046A, pulse oscillation laser is more preferable than modulated continuous oscillation laser.

In the above-described laser light sources, semiconductor laser is particularly preferably available because of its small size, affordable price and furthermore needlessness of a modulator.

A filter 28 is selected according to a combination of photostimulated luminescence wavelength of a photostimulable phosphor included in a radiographic image conversion panel 23 and photostimulated excitation light wavelength of photostimulated excitation light source 24, since the filter transmits the photostimulated luminescence emitted from a radio graphic image conversion panel 23 and intercept photostimulated excitation light.

For example, in practically preferable combination such that excitation wavelength is 500 to 900nm and photostimulated luminance wavelength is 300 to 500nm, glass filters from blue to violet such as C-39, C-40, V-40, V-42 and V-44 (Toshiba Co. ltd.), 7-54 and 7-59 (Corning Co. Ltd.), BG-1, BG-3, BG-25, BG-37 and BG-38 (Spectrofilm Co. Ltd.) and the like are available as the filter. An interference filter having any property on some level also can be used. As for the photoelectrical converter 25, any devices that convert variation of light intensity to that of electric signal are available such as photoelectric tube, photoelectric multiplier, photodiode, phototransistor, solar battery, photoconductive cell and the like.

EXAMPLE

The present invention is specifically illustrated by referring to examples, but embodiments of the invention is not limited thereto.

EXAMPLE 1:

<MANUFACTURE OF RADIOGRAPHIC IMAGE CONVERSION PANEL SAMPLES 1 TO 8 (SAMPLES 1 TO 8)>

(MANUFACTURE OF PHOTOSTIMULABLE PHOSPHOR)

<PHOSPHOR PARTICLES - COATING>

A photostimulable phosphor was obtained by filling CsBr:Eu basic materials prepared to become $CsCO_3$ such that an Eu amount is 5/10,000 mol based on 1 mol of CsBr in a molybdenum boat and evaporating at a vacuum state of 1.0 x 10$^{-2}$ Pa and at an evaporation speed of 10 $\mu$m/min with a distance to a substrate of 28 cm (an average particle diameter of phosphor particles at the extremity of phosphor crystal was 4.9 $\mu$m). A substrate temperature is controlled at 150 °C.

With respect to an average particle diameter of phosphor particles at the extremity of the phosphor crystal, particle diameters of 100 phosphor particles at the extremity of the phosphor crystal were obtained by an electron microscope, and an average value thereof was rendered the average particle diameter.

In order to form the phosphor layer, the above phosphor and a polyester solution (Vylon 63ss supplied from Toyobo Co., Ltd.) were mixed/dispersed as a resin solution of 5% by mass of the phosphor with a solid concentration of 95% by mass to make a coating material.

The photostimulable phosphor layer was formed by coating this coating material on a support of 188 $\mu$m polyethylene terephthalate film (188 x 30 supplied from Toray Industries, Inc.) and coating/drying in three drying zones of 80 °C, 100 °C and 110 °C in an inert oven under a drying atmosphere of Ar at a CS (coating speed) of 2 m/min.

The support having the above photostimulable phosphor layer was placed in a barrier bag (GL-AE relief printing) to which backside AL foil was attached, and sealed to make the radiographic pattern conversion panel sample 1 (sample 1).

The radiographic pattern conversion panel samples 2 to 5 (samples 2 to 5) were made as is the case with the sample 1, except for controlling the evaporation speed, the distance between the phosphor basic materials and the substrate, and the substrate temperature as described in Table 1.

For respective samples, the following evaluations were carried out.

<EVALUATION OF SHARPNESS>

The sharpness of the radiographic image conversion panel sample was evaluated by obtaining a modification transmission function (MTF).

MTF was obtained by attaching a CTF chart on the radiographic image conversion panel sample, subsequently irradiating 80 kVp of X-ray at 10 mR (distance to a subject: 1.5 m) on the radiographic image conversion panel sample, and then scanning/reading a CTF chart pattern using semiconductor laser with a diameter of 100 $\mu m\varphi$ (680 nm: power on the panel, 40 mW). A value in the table is represented by a value where 2.01 p/mm of MTF value was added.

<EVALUATION OF LUMINANCE AND LUMINANCE DISTRIBUTION (UNEVEN LUMINANCE)>

The luminance was evaluated using Regius 350 supplied from Konica Corporation.

As with the evaluation of sharpness, after irradiating X-ray by a tungsten bulb at 80 kVp and 10 mAs with a distance of 2 m between an expose radiation source and a plate, luminance was read by placing the plate in Regius 350. The evaluation was performed on the basis of electric signals obtained from the photomultiplier.

Electric signal distribution from the photomultiplier in a picturized face was relatively evaluated, and a standard deviation was calculated to make a luminance distribution (S.D.) of each sample. The smaller a value is, the less the uneven luminance is.

<MEASUREMENT OF X-RAY ABSORPTION AMOUNT>

An arrival X-ray amount: B was measured using an ionization type dosimeter (Ionex Dose Master 2590 B supplied from Toyo Medic Co., Ltd.) disposed at a location at 105 cm from a molybdenum anode of the target tube, by transmitting X-ray generated from a molybdenum target tube driven at 28 kVp through a molybdenum filter with a thickness of 0.03 mm, and performing X-ray irradiation under a condition at 64 mA·sec.

Then, an X-ray amount: D which transmitted through the radiographic pattern conversion panel was measured using the ionization type dosimeter by disposing the radiographic pattern conversion panel at a location at 100 cm from the molybdenum anode of the target tube and performing the X-ray irradiation under the same condition as the above, and an X-ray absorption amount was calculated by the following calculation formula.

X-ray absorption amount (%) = (D/B) x 100

In the table, the samples 1 to 3 and 5 are the samples of the present invention, and the sample 4 is the sample for comparison.

As obvious from Table 1, it is understood that the samples of the invention are more excellent than the sample for comparison.

**Table 1**

| | Evaporation Speed | Distance to Substrate | Substrate Temperature | | Luminance | MTF | Uneven Luminance | Absorption Amount of X-ray at 28 kV | Particle Diameter at Extremity |
|---|---|---|---|---|---|---|---|---|---|
| | μm/min | cm | Control | °C | | (21p/mm) | (S.D.) | (%) | (μm) |
| Sample 1 | 10 | 28 | Yes | 150 | 1.67 | 32% | 10 | 70 | 4.9 |
| Sample 2 | 20 | 28 | Yes | 150 | 1.82 | 33% | 8 | 85 | 3.8 |
| Sample 3 | 40 | 28 | Yes | 150 | 2.54 | 41% | 7 | 95 | 2.7 |
| Sample 4 | 5 | 28 | No | 260 | 0.43 | 7% | 46 | 65 | 12.2 |
| Sample 5 | 40 | 65 | Yes | 150 | 1.22 | 32% | 9 | 89 | 4.2 |

Particle Diameter at Extremity: Average particle diameter of crystal at the extremity of the phosphor

EP 1 465 208 A2

As shown in the example, the radiographic image conversion panel and the method for manufacturing the radiographic image conversion panel according to the invention are inexpensive, excellent in luminance, even luminance and sharpness, and have an excellent effect in X-ray absorption amount (absorption rate).

The entire disclosure of Japanese Patent Application No. 2003-079230 which was filed on March 24, 2003, including specification, claims, drawings and abstract, is incorporated into the present invention in its entirety.

**Claims**

1. A method for manufacturing a radiographic image conversion panel having a photostimulable phosphor layer on a support, comprising:

   setting a distance between a photostimulable phosphor basic material and a substrate 7 to 60 cm;
   controlling a temperature of the substrate; and
   evaporating the photostimulable phosphor basic material in a vacuum of $1.0 \times 10^{-2}$ Pa with an evaporation speed of 0.5 μm/min or more, to form a photostimulable phosphor in the photostimulable phosphor layer by a vapor phase method.

2. The method of claim 1, wherein the evaporation speed is in a range of 0.5 to 10 μm/min.

3. The method of claim 1 or 2, wherein the controlling a temperature of the substrate is performed by cooling.

4. The method of claim 3, wherein the cooling comprises controlling the temperature of the substrate in a range of 10 to 200°C.

5. A radiographic image conversion panel manufactured by the method of any one of claims 1-4, wherein the photostimulable phosphor layer of the radiographic image conversion panel has a thickness of 50 to 120 μm and an X-ray absorption amount of 70 to 95%.

6. The panel of claim 5, wherein the photostimulable phosphor layer contains a photostimulable phosphor which makes alkali halide represented by a general formula (1) a host,

$$M^1X \cdot aM^2X' \cdot bM^3X'' : eA \tag{1}$$

where $M^1$ represents at least one alkali metal atom selected from atoms of Li, Na, K, Rb and Cs; $M^2$ represents at least one bivalent metal atom selected from atoms of Be, Mg, Ca, Sr, Ba, Zn, Cd, Cu and Ni; $M^3$ represents at least one trivalent metal atom selected from atoms of Sc, Y, La, Ce, Pr, Nd, Pm, Sm, Eu, Gd, Tb, Dy, Ho, Er, Tm, Yb, Lu, Al, Ga and In; X, X' and X'' represent at least one halogen atom selected from atoms of F, Cl, Br and I; A is at least one metal atom selected from respective atoms of Eu, Tb, In, Ce, Tm, Dy, Pr, Ho, Nd, Yb, Er, Gd, Lu, Sm, Y, Tl, Na, Ag, Cu and Mg; and a, b and e satisfy $0 \leq a < 0.5$, $0 \leq b < 0.5$ and $0 < e \leq 0.2$.

7. The radiographic image conversion panel of claim 5 or 6, wherein an average particle diameter of phosphor particles at an extremity of phosphor crystals in the photostimulable phosphor layer is in a range of 0.1 to 5 μm.

# FIG.1